# FASCICULE DE BREVET EUROPEEN

(11) **EP 0 820 851 B1**
(45) Date de publication et mention de la délivrance du brevet: **16.04.2003**
(21) Numéro de dépôt: 97401531.5
(22) Date de dépôt: 01.07.1997
(51) Int. Cl.: B29C 59/12

(54) **Procédé et dispositif de commande du fonctionnement d'un système de traitement de surface**
Verfahren und Vorrichtung zum Steuern der Funktion eines Oberflächenbehandlungssystems
Method and apparatus for controlling the functioning of a surface treatment system

(30) Priorité: 23.07.1996 FR 9609234
(43) Date de publication de la demande: 28.01.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Lagrange, Gilles, 91470 Forges Les Bains (FR); Hibon, Isabelle, 78150 Le Chesnay (FR)
(74) Mandataire: Vesin, Jacques

(56) Documents cités:
- EP-A- 0 129 199
- EP-A- 0 248 274
- EP-A- 0 658 416
- US-A- 4 946 568

## Description

La présente invention concerne un dispositif de commande du fonctionnement d'un système de traitement de surface d'un substrat solide en défilement, par décharge électrique à barrière diélectrique dans une atmosphère gazeuse contrôlée.

A titre illustratif, on peut citer les exemples d'application suivants : le traitement de films polymères d'emballage alimentaire, ou encore la fabrication de condensateurs.

On connaît déjà dans l'état de la technique, par exemple du document au nom de E. Prinz paru dans « Plastics Southern Africa » en Juin 1983, pages 50 et suivantes ou bien encore du document US-A-4 946 568, des systèmes de traitement de surface de ce type, qui comportent un dispositif de traitement dans lequel défile le substrat à traiter, ce dispositif étant raccordé à des moyens d'alimentation de celui-ci en gaz, à des moyens d'alimentation de celui-ci en énergie électrique pour engendrer la décharge électrique et à des moyens d'aspiration de gaz.

De tels systèmes permettent de traiter des substrats pour améliorer leurs caractéristiques notamment d'adhésion, de mouillabilité et d'imperméabilité au gaz, ce qui permet d'étendre leurs domaines d'applications.

C'est ainsi que l'on a déjà proposé par le document EP-516 804 au nom de la Demanderesse, de réaliser un dépôt d'une couche mince d'oxyde de silicium liée à un substrat en un matériau polymère, qui comprend la soumission d'une surface du substrat à une décharge électrique à barrière diélectrique et l'exposition de cette surface à une atmosphère contenant un silane, grâce à quoi, il se forme un dépôt d'oxyde de silicium lié à la surface du substrat.

Les dispositifs de traitement pour la mise en oeuvre de ce type de procédés sont en général intégrés dans une ligne de production ou de transformation en continu de substrats (ces transformations pouvant par exemple comporter des opérations de métallisation, encrage, ou encore laminage) et le réglage de ces dispositifs est réalisé par exemple à partir d'une recette préétablie en fonction de cette ligne de production/transformation.

On conçoit cependant que la manipulation d'un tel système de traitement et en particulier la manipulation de gaz de ce type, peut présenter un certain nombre de problèmes liés à une éventuelle mauvaise coordination de la gestion, notamment sécuritaire, du fonctionnement d'un tel système.

Le but de l'invention est donc de résoudre ces problèmes.

A cet effet, l'invention a pour objet un dispositif de commande du fonctionnement d'un système de traitement de surface d'un substrat solide en défilement, par décharge électrique à barrière diélectrique dans une atmosphère gazeuse contrôlée, système du type comportant un dispositif de traitement dans lequel défile le substrat à traiter, ce dispositif étant raccordé à des moyens d'alimentation de celui-ci en gaz, à des moyens d'alimentation de celui-ci en énergie électrique pour engendrer la décharge électrique, et à des moyens d'aspiration des gaz, se caractérisant en ce qu'il comporte une unité de traitement d'informations adaptée pour recevoir en entrée, une information de vitesse de défilement du substrat dans le dispositif, et raccordée en sortie aux moyens d'alimentation en gaz, aux moyens d'alimentation en énergie électrique, et aux moyens d'aspiration pour :
a) lors de la mise en marche du dispositif de traitement et lorsque la vitesse de défilement du substrat est supérieure à une vitesse prédéterminée, effectuer les actions suivantes :
   - déclencher le fonctionnement des moyens d'aspiration,
   - déclencher le fonctionnement des moyens d'alimentation en gaz et,
   - déclencher le fonctionnement des moyens d'alimentation en énergie électrique;
b) lors de l'arrêt du dispositif et/ou lorsque la vitesse de défilement du substrat est inférieure à un vitesse prédéterminée, effectuer les actions suivantes :
   - interrompre le fonctionnement des moyens d'alimentation en énergie électrique,
   - interrompre le fonctionnement des moyens d'alimentation en gaz et,
   - interrompre le fonctionnement des moyens d'aspiration.

Avantageusement, dans le cas a) de mise en marche du dispositif, les actions sont effectuées dans l'ordre chronologique suivant :
1)- déclencher le fonctionnement des moyens d'aspiration,
2)- déclencher le fonctionnement des moyens d'alimentation en gaz et,
3)- déclencher le fonctionnement des moyens d'alimentation en énergie électrique.

Avantageusement, dans le cas b) d'arrêt du dispositif et/ou de situation où la vitesse de défilement du substrat s'est abaissée à un niveau inférieur à une vitesse prédéterminée, les actions sont effectuées dans l'ordre chronologique suivant :
1)- interrompre le fonctionnement des moyens d'alimentation en énergie électrique,
2)- interrompre le fonctionnement des moyens d'alimentation en gaz et,
3)- interrompre le fonctionnement des moyens d'aspiration.

La « vitesse prédéterminée » selon l'invention peut être identique pour le cas a) et le cas b), ou bien être différente dans les deux cas.

Comme il apparaîtra clairement à l'homme du métier, la vitesse prédéterminée intervenant dans la situation a) et/ou b) est établie au cas par cas, selon les conditions de fonctionnement de chaque site utilisateur, par exemple en prenant en compte au moins l'une des méthodes suivantes
- à partir de la vitesse minimale au-dessous de laquelle le traitement du substrat n'est pas satisfaisant;
- à partir de la vitesse minimale au-dessous de laquelle il existe des risques de dégradations du substrat (temps de contact du substrat avec la décharge), cette vitesse dépendant notamment de la nature du substrat.

Selon les cas, on comprendra donc que les « déclenchements » ou « interruptions » intervenant dans les situations a) ou encore b) pourront être immédiats ou quasi immédiats (donc avec un niveau de vitesse prédéterminée très faible dans le cas a), ou dans le cas b), très proche de la vitesse de défilement qu'avait adopté le système avant l'arrêt.

Selon une des mises en oeuvre de l'invention, les moyens d'alimentation en gaz comprennent des moyens d'alimentation en un gaz réducteur, et des moyens d'alimentation en un gaz porteur et en un gaz oxydant, et l'unité de traitement d'informations, lors du déclenchement du fonctionnement de ces moyens d'alimentation en gaz, est adaptée pour déclencher le fonctionnement des moyens d'alimentation en gaz porteur et en gaz oxydant, puis celui des moyens d'alimentation en gaz réducteur, et lors de l'interruption du fonctionnement de ces moyens d'alimentation en gaz, est adaptée pour interrompre le fonctionnement des moyens d'alimentation en gaz réducteur, puis celui des moyens d'alimentation en gaz porteur et en gaz oxydant.

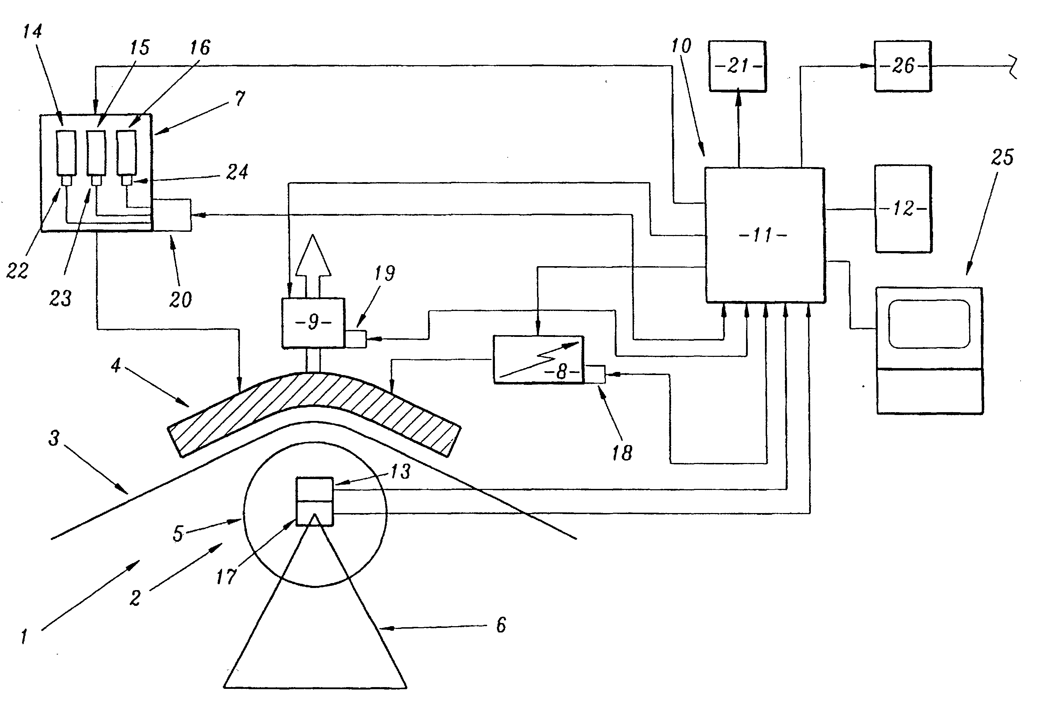

L'invention sera mieux comprise à la lecture de la description qui va suivre, donnée uniquement à titre d'exemple et faite en se référant au dessin annexé, qui représente un schéma synoptique illustrant la structure et le fonctionnement d'un dispositif de commande selon l'invention.

On reconnaît en effet sur cette figure, un dispositif de commande du fonctionnement d'un système de traitement de surface d'un substrat solide en défilement, par décharge électrique à barrière diélectrique dans une atmosphère gazeuse contrôlée.

Pour de plus amples renseignements concernant ce procédé de traitement, on pourra se reporter au document antérieur précité (EP-516 804).

Sur cette figure, le système de traitement est désigné de façon générale par la référence 1 et il comporte un dispositif de traitement désigné par la référence générale 2, dans lequel défile le substrat à traiter.

Ce substrat est désigné par la référence générale 3 et se présente par exemple sous la forme d'un film adapté pour défiler dans le dispositif de traitement, entre une partie fixe 4 de celui-ci et une partie mobile en rotation 5 de celui-ci, placées sur des moyens de support 6 (on comprend que la partie 4 est fixe durant la phase de traitement, le système étant le plus souvent monté sur vérins permettant de le lever et l'abaisser durant d'autres phases).

Un tel dispositif de traitement et plus particulièrement la partie fixe 4 de celui-ci, est raccordé à des moyens d'alimentation de celui-ci en gaz, désignés par la référence générale 7, à des moyens d'alimentation de celui-ci en énergie électrique, désignés par la référence générale 8, pour engendrer la décharge électrique et à des moyens d'aspiration de gaz, désignés par la référence générale 9.

Selon l'invention, le dispositif de commande comporte une unité de traitement d'informations désignée par la référence générale 10 sur cette figure, comportant tout calculateur approprié associé à des moyens de mémorisation de données, le calculateur étant désigné par la référence générale 11 sur cette figure, tandis que les moyens de mémorisation sont désignés par la référence générale 12.

Cette unité de traitement d'informations 10 reçoit en entrée une information de vitesse de défilement du substrat dans le dispositif de traitement, à partir par exemple d'un capteur de vitesse 13 associé par exemple à la partie mobile en rotation 5 du dispositif de traitement.

Par ailleurs, l'unité de traitement d'informations 10 est reliée en sortie aux moyens d'alimentation en gaz 7, aux moyens d'alimentation en énergie électrique 8 et aux moyens d'aspiration 9 pour, lors de la mise en marche du dispositif de traitement et lorsque la vitesse de défilement du substrat dans le dispositif est supérieure à une vitesse prédéterminée, réaliser par exemple successivement les actions suivantes :
1)- déclencher le fonctionnement des moyens d'aspiration 9,
2)- déclencher le fonctionnement des moyens d'alimentation en gaz 7, et,
3)- déclencher le fonctionnement des moyens d'alimentation en énergie électrique 8.

De plus, lors de l'arrêt du dispositif de traitement et/ou lorsque la vitesse de défilement du substrat chute à un niveau situé en dessous d'une vitesse prédéterminée, l'unité de traitement d'informations est par exemple adaptée pour, successivement :
1) interrompre le fonctionnement des moyens d'alimentation en énergie électrique 8,
2) interrompre le fonctionnement des moyens d'alimentation en gaz 7, et,
3) interrompre le fonctionnement des moyens d'aspiration 9.

On peut également constater sur cette figure, que les moyens d'alimentation en gaz 7 peuvent comporter des moyens d'alimentation en gaz réducteur, tels qu'un silane, ces moyens étant désignés par la référence générale 14 sur cette figure et des moyens d'alimentation en gaz porteur et en gaz oxydant désignés par exemple par les références 15 et 16 respectivement.

Dans ce cas, l'unité de traitement d'informations 10, lors du déclenchement du fonctionnement de ces moyens d'alimentation en gaz 7, est adaptée pour par exemple déclencher le fonctionnement des moyens d'alimentation en gaz porteur et en gaz oxydant 15,16, puis celui des moyens d'alimentation en gaz réducteur 14 et lors de l'interruption du fonctionnement de ces moyens d'alimentation en gaz, est adaptée pour interrompre le fonctionnement des moyens d'alimentation en gaz réducteur 14, puis celui des moyens d'alimentation en gaz porteur et en gaz oxydant 15,16 respectivement.

On conçoit alors que cette unité de traitement d'informations permet de mettre en oeuvre une procédure particulière de commande des différents moyens du système de traitement, ce qui permet de prévenir ou résoudre d'éventuels problèmes qui pourraient résulter d'une mauvaise coordination de la gestion de celui-ci.

Par ailleurs, cette unité de traitement d'informations 10 peut également être reliée à des capteurs d'état et/ou à des actionneurs fonctionnels du système de traitement pour permettre le contrôle/commande du fonctionnement de celui-ci.

Ces différents capteurs et/ou actionneurs, sont par exemple désignés par la référence générale 17 pour le dispositif de traitement 2, 18 pour les moyens d'alimentation en énergie électrique 8, 19 pour les moyens d'aspiration 9 et 20 pour les moyens d'alimentation en gaz 7.

A titre illustratif, ces capteur d'état peuvent par exemple être constitués de débitmètres de gaz de traitement, de capteurs de pression, ou encore de capteurs de débit d'aspiration.

On notera par exemple que ces moyens 20 associés aux moyens d'alimentation en gaz 7 peuvent également être associés à des moyens tels que des capteurs d'état des différents moyens d'alimentation en gaz du dispositif, pour déclencher le fonctionnement de moyens d'alarme 21 raccordés à l'unité de traitement d'informations 10 en cas de dysfonctionnement de ceux-ci.

C'est ainsi par exemple que les moyens d'alimentation en gaz réducteur 14 peuvent être associés à un détecteur 22, tandis que les moyens d'alimentation en gaz porteur et oxydant 15,16 respectivement, peuvent être associés à des détecteurs 23 et 24 respectivement.

ces détecteurs comprennent par exemple des détecteurs de défaut d'alimentation de ces moyens pour engendrer une alarme permettant d'attirer l'attention d'un opérateur quelconque du système ou encore à un système de contrôle/commande du système à distance.

Une information de défaut d'alimentation correspondante peut également être engendrée et utilisée pour basculer par exemple d'une source d'alimentation en gaz principale à une source d'alimentation auxiliaire ou de secours.

Enfin, l'unité de traitement d'informations 10 peut également être raccordée à une interface homme/machine 25 constituée par tout terminal d'ordinateur approprié par exemple et peut également être reliée à un centre de contrôle/commande à distance du système de traitement, par l'intermédiaire de moyens de transmission d'informations 26 de type approprié.

L'information de défaut d'alimentation peut également être transmise vers ce centre de contrôle/commande à distance du système à travers ces moyens de transmission d'informations 26 et l'unité de traitement d'informations 10.

Le déclenchement et l'interruption du fonctionnement des moyens correspondants du système de traitement sont bien entendu fonctions de la nature de ceux-ci.

C'est ainsi par exemple que les moyens d'alimentation en gaz peuvent être associés à des vannes de sortie à pilotage électrique, commandées par l'unité de traitement d'informations, tandis que les moyens d'aspiration et les moyens d'alimentation en énergie électrique peuvent être pilotés par exemple en tout ou rien par cette unité.

## Revendications

1. Dispositif de commande du fonctionnement d'un système de traitement de surface d'un substrat solide en défilement, par décharge électrique à barrière diélectrique dans une atmosphère gazeuse contrôlée, système du type comportant un dispositif de traitement (2) dans lequel défile le substrat à traiter (3), ce dispositif de traitement étant raccordé à des moyens d'alimentation (7) de celui-ci en gaz, à des moyens d'alimentation (8) de celui-ci en énergie électrique pour engendrer la décharge électrique, et à des moyens d'aspiration (9) des gaz, **caractérisé en ce qu'**il comporte une unité de traitement d'informations (10) adaptée pour recevoir en entrée, une information de vitesse de défilement du substrat dans le dispositif de traitement, et raccordée en sortie aux moyens d'alimentation en gaz (7), aux moyens d'alimentation en énergie électrique (8) et aux moyens d'aspiration des gaz(9), pour :
a) lors de la mise en marche du dispositif de traitement (2) et lorsque la vitesse de défilement du substrat (3) est supérieure à une vitesse prédéterminée, effectuer les actions suivantes :
- déclencher le fonctionnement des moyens d'aspiration (9),
- déclencher le fonctionnement des moyens d'alimentation en gaz (7),
- déclencher le fonctionnement des moyens d'alimentation en énergie électrique (8), et
b) lors de l'arrêt du dispositif et/ou lorsque la vitesse de défilement du substrat s'abaisse à un niveau inférieur à une vitesse prédéterminée, effectuer les actions suivantes :
- interrompre le fonctionnement des moyens d'alimentation en énergie électrique (8),
- interrompre le fonctionnement des moyens d'alimentation en gaz (7) et,
- interrompre le fonctionnement des moyens d'aspiration (9).

2. Dispositif de commande selon la revendication 1, **caractérisé en ce que** l'unité de traitement d'informations (10) est apte, dans le cas a), à effectuer les dites actions dans l'ordre chronologique suivant :
1)- déclencher le fonctionnement des moyens d'aspiration (9),
2)- déclencher le fonctionnement des moyens d'alimentation en gaz (7),
3)- déclencher le fonctionnement des moyens d'alimentation en énergie électrique.

3. Dispositif de commande selon la revendication 1 ou 2, **caractérisé en ce que** l'unité de traitement d'informations (10) est apte, dans le cas b), à effectuer les dites actions dans l'ordre chronologique suivant :
1)- interrompre le fonctionnement des moyens d'alimentation en énergie électrique (8),
2) - interrompre le fonctionnement des moyens d'alimentation en gaz (7) et,
3)- interrompre le fonctionnement des moyens d'aspiration (9).

4. Dispositif de commande selon l'une des revendications 1 à 3, **caractérisé en ce que** les moyens d'alimentation en gaz (7) comprennent des moyens d'alimentation en gaz réducteur (14) et des moyens d'alimentation en gaz porteur et en gaz oxydant (15,16) et **en ce que** l'unité de traitement d'informations (10), lors d'un déclenchement du fonctionnement de ces moyens d'alimentation en gaz, est adaptée pour déclencher le fonctionnement des moyens d'alimentation en gaz porteur et en gaz oxydant (15,16), puis celui des moyens d'alimentation en gaz réducteur (14) et lors d'une interruption du fonctionnement de ces moyens d'alimentation en gaz, est adaptée pour interrompre le fonctionnement des moyens d'alimentation en réducteur (14), puis celui des moyens d'alimentation en gaz porteur et en gaz oxydant (15,16).

5. Dispositif de commande selon l'une des revendications 1 à 4, **caractérisé en ce que** l'unité de traitement d'informations est reliée à des capteurs d'état et/ou à des actionneurs fonctionnels (17,18,19,20) du système de traitement, pour permettre le contrôle/commande du fonctionnement de celui-ci.

6. Dispositif de commande selon l'une quelconque des revendications précédentes, **caractérisé en ce que** l'unité de traitement d'informations (10) est raccordée à un centre de contrôle/commande à distance du système de traitement par l'intermédiaire de moyens de transmission d'informations (26).

7. Dispositif de commande selon la revendication 5 ou 6, **caractérisé en ce que** l'unité de traitement d'informations (10) est reliée à des capteurs d'état (22,23,24) des moyens d'alimentation en gaz (7) du dispositif de traitement pour déclencher le fonctionnement de moyens d'alarme (21) et/ou de moyens d'alimentation de secours, en cas de dysfonctionnement de ceux-ci.

8. Dispositif de commande selon l'une quelconque des revendications précédentes, **caractérisé en ce que** l'unité de traitement d'informations (10) est reliée à au moins une interface homme/machine (25).

9. Dispositif de commande selon l'une quelconque des revendications précédentes, **caractérisé en ce que** l'information de vitesse de défilement du substrat (3) dans le dispositif de traitement (2) est délivrée à l'unité de traitement d'informations (10) par un capteur de vitesse (13) associé à celui-ci.

10. Procédé de commande du fonctionnement d'un système de traitement de surface d'un substrat solide en défilement, par décharge électrique à barrière diélectrique dans une atmosphère gazeuse contrôlée, système du type comportant un dispositif de traitement (2) dans lequel défile le substrat à traiter (3), ce dispositif étant raccordé à des moyens d'alimentation (7) de celui-ci en gaz, à des moyens d'alimentation (8) de celui-ci en énergie électrique pour engendrer la décharge électrique, et à des moyens d'aspiration (9) des gaz, **caractérisé en ce que** l'on mesure la vitesse de défilement du substrat dans le dispositif et **en ce que** l'on procède aux actions suivantes :
a) lors de la mise en marche du dispositif de traitement (2) et lorsque la vitesse de défilement du substrat (3) est supérieure à une vitesse prédéterminée :
- on déclenche le fonctionnement des moyens d'aspiration (9),
- on déclenche le fonctionnement des moyens d'alimentation en gaz (7),
- on déclenche le fonctionnement des moyens d'alimentation en énergie électrique (8), et
b) lors de l'arrêt du dispositif et/ou lorsque la vitesse de défilement du substrat s'abaisse à un niveau inférieur à une vitesse prédéterminée :
- on interrompt le fonctionnement des moyens d'alimentation en énergie électrique (8),
- on interrompt le fonctionnement des moyens d'alimentation en gaz (7) et,
- on interrompt le fonctionnement des moyens d'aspiration (9).

11. Procédé de commande selon la revendication 10, **caractérisé en ce que** dans le cas a), on effectue les dites actions dans l'ordre chronologique suivant :
1)- on déclenche le fonctionnement des moyens d'aspiration (9),
2)- on déclenche le fonctionnement des moyens d'alimentation en gaz (7),
3)- on déclenche le fonctionnement des moyens d'alimentation en énergie électrique.

12. Procédé de commande selon la revendication 10 ou 11, **caractérisé en ce que** dans le cas b), on effectue les dites actions dans l'ordre chronologique suivant :
1)- on interrompt le fonctionnement des moyens d'alimentation en énergie électrique (8),
2)- on interrompt le fonctionnement des moyens d'alimentation en gaz (7) et,
3)- on interrompt le fonctionnement des moyens d'aspiration (9).

13. Procédé de commande selon l'une des revendications 10 à 12 , **caractérisé en ce que** les moyens d'alimentation en gaz (7) comprennent des moyens d'alimentation en gaz réducteur (14) et des moyens d'alimentation en gaz porteur et en gaz oxydant (15,16) et **en ce que** l'unité de traitement d'informations (10), lors d'un déclenchement du fonctionnement des moyens d'alimentation en gaz, déclenche le fonctionnement des moyens d'alimentation en gaz porteur et en gaz oxydant (15,16), puis celui des moyens d'alimentation en gaz réducteur (14) et lors d'une interruption du fonctionnement de ces moyens d'alimentation en gaz, interrompt le fonctionnement des moyens d'alimentation en réducteur (14), puis celui des moyens d'alimentation en gaz porteur et en gaz oxydant (15,16).

14. Procédé de commande selon l'une des revendications 10 à 13, **caractérisé en ce que** l'on effectue une opération de contrôle/commande à distance du système de traitement par l'intermédiaire de moyens de transmission d'informations (26).

## Patentansprüche

1. Vorrichtung zur Steuerung der Funktion eines Oberflächenbehandlungssystems für ein festes Substrat im Vorbeilauf durch elektrische Entladung mit dielektrischer Grenzschicht in einer kontrollierten Gasatmosphäre, eines Systems von der Art, die eine Behandlungsvorrichtung (2) umfasst, in der das zu behandelnde Substrat (3) vorbeiläuft, wobei diese Behandlungsvorrichtung an Mittel (7) zu seiner Versorgung mit Gas, an Mittel (8) zu seiner Versorgung mit elektrischer Energie zur Auslösung der elektrischen Entladung und an Mittel (9) zur Ansaugung von Gasen angeschlossen ist, **dadurch gekennzeichnet, dass** sie eine Informationsverarbeitungseinheit (10) umfasst, die dafür ausgelegt ist, am Eingang eine Information über die Geschwindigkeit des Vorbeilaufens des Substrats in der Behandlungsvorrichtung zu empfangen, und am Ausgang an die Gasversorgungsmittel (7), die elektrischen Energieversorgungsmittel (8) und die Gasansaugmittel (9) angeschlossen ist, um:
a) bei der Ingangsetzung der Behandlungsvorrichtung (2) und wenn die Geschwindigkeit des Vorbeilaufens des Substrats (3) größer als eine vorbestimmte Geschwindigkeit ist, die folgenden Aktionen auszulösen:
- die Funktion der Ansaugmittel (9) auszulösen,
- die Funktion der Gasversorgungsmittel (7) auszulösen,
- die Funktion der elektrischen Energieversorgungsmittel (8) auszulösen, und
b) beim Anhalten der Vorrichtung und/oder wenn die Geschwindigkeit des Vorbeilaufens des Substrats auf ein Niveau absinkt, das geringer als eine vorbestimmte Geschwindigkeit ist, die folgenden Aktionen auszulösen:
- die Funktion der elektrischen Energieversorgungsmittel (8) zu unterbrechen,
- die Funktion der Gasversorgungsmittel (7) zu unterbrechen und
- die Funktion der Ansaugmittel (9) zu unterbrechen.

2. Steuervorrichtung nach Anspruch 1, **dadurch gekennzeichnet, dass** die Informationsverarbeitungseinheit (10) in der Lage ist, im Falle a) die Aktionen in folgender chronologischer Reihenfolge auszuführen:
1) - die Funktion der Ansaugmittel (9) auszulösen,
2)- die Funktion der Gasversorgungsmittel (7) auszulösen,
3) - die Funktion der elektrischen Energieversorgungsmittel auszulösen.

3. Steuervorrichtung nach Anspruch 1 oder 2, **dadurch gekennzeichnet, dass** die Informationsverarbeitungseinheit (10) in der Lage ist, im Falle b) die Aktionen in folgender chronologischer Reihenfolge auszuführen:
1)- die Funktion der elektrischen Energieversorgungsmittel (8) zu unterbrechen,
2) - die Funktion der Gasversorgungsmittel (7) zu unterbrechen und
3)- die Funktion der Ansaugmittel (9) zu unterbrechen.

4. Steuervorrichtung nach einem der Ansprüche 1 bis 3, **dadurch gekennzeichnet, dass** die Gasversorgungsmittel (7) Versorgungsmittel für reduzierendes Gas (14) und Versorgungsmittel für Trägergas und Sauerstoffgas (15, 16) umfassen und die Informationsverarbeitungseinheit (10) beim Auslösen der Funktion dieser Gasversorgungsmittel dafür ausgelegt ist, die Funktion der Versorgungsmittel für Trägergas und Sauerstoffgas (15, 16) und dann die dieser Versorgungsmittel für reduzierendes Gas (14) auszulösen, und bei einer Unterbrechung der Funktion dieser Gasversorgungsmittel dafür ausgelegt ist, die Funktion der Versorgungsmittel für reduzierendes Gas (14) und dann die der Versorgungsmittel für Trägergas und Sauerstoffgas (15, 16) zu unterbrechen.

5. Steuervorrichtung nach einem der Ansprüche 1 bis 4, **dadurch gekennzeichnet, dass** die Informationsverarbeitungseinheit mit Zustandssensoren und/oder Funktionsschaltern (17, 18, 19, 20) des Behandlungssystems verbunden ist, um die Kontrolle/Steuerung von dessen Funktion zu ermöglichen.

6. Steuervorrichtung nach einem der vorhergehenden Ansprüche, **dadurch gekennzeichnet, dass** die Informationsverarbeitungseinheit (10) über Informationsübertragungsmittel (26) mit einer Fernsteuerungs-/-kontrolleinrichtung des Behandlungssystems verbunden ist.

7. Steuervorrichtung nach Anspruch 5 oder 6, **dadurch gekennzeichnet, dass** die Informationsverarbeitungseinheit (10) mit Zustandssensoren (22, 23, 24) der Gasversorgungsmittel (7) der Behandlungsvorrichtung verbunden ist, um im Falle von deren Fehlfunktion die Funktion von Alarmmitteln (21) und/oder Hilfsversorgungsmitteln auszulösen.

8. Steuervorrichtung nach einem der vorhergehenden Ansprüche, **dadurch gekennzeichnet, dass** die Informationsverarbeitungseinheit (10) mit zumindest einer Mensch/Maschinenschnittstelle (25) verbunden ist.

9. Steuervorrichtung nach einem der vorhergehenden Ansprüche, **dadurch gekennzeichnet, dass** die Information über die Geschwindigkeit des Vorbeilaufens des Substrats (3) in der Behandlungsvorrichtung (2) durch einen mit dieser verknüpften Geschwindigkeitssensor (13) an die Informationsverarbeitungseinheit (10) geliefert wird.

10. Verfahren zur Steuerung der Funktion eines Oberflächenbehandlungssystems für ein festes Substrat im Vorbeilauf durch elektrische Entladung mit dielektrischer Grenzschicht in einer kontrollierten Gasatmosphäre, eines Systems von der Art, die eine Vorrichtung (2) umfasst, in der das zu behandelnde Substrat (3) vorbeiläuft, wobei diese Vorrichtung an Mittel (7) zu seiner Versorgung mit Gas, an Mittel (8) zu seiner Versorgung mit elektrischer Energie zur Auslösung der elektrischen Entladung und an Mittel (9) zur Ansaugung von Gasen angeschlossen ist, **dadurch gekennzeichnet, dass** die Geschwindigkeit des Vorbeilaufens des Substrats in der Vorrichtung gemessen wird und dass die folgenden Aktionen ausgeführt werden:
a) bei der Ingangsetzung der Behandlungsvorrichtung (2) und wenn die Geschwindigkeit des Vorbeilaufens des Substrats (3) größer als eine vorbestimmte Geschwindigkeit ist:
- die Funktion der Ansaugmittel (9) wird ausgelöst,
- die Funktion der Gasversorgungsmittel (7) wird ausgelöst,
- die Funktion der elektrischen Energieversorgungsmittel (8) wird ausgelöst, und
b) beim Anhalten der Vorrichtung und/oder wenn die Geschwindigkeit des Vorbeilaufens des Substrats auf ein Niveau absinkt, das geringer als eine vorbestimmte Geschwindigkeit ist:
- die Funktion der elektrischen Energieversorgungsmittel (8) wird unterbrochen,
- die Funktion der Gasversorgungsmittel (7) wird unterbrochen und
- die Funktion der Ansaugmittel (9) wird unterbrochen.

11. Steuerungsverfahren nach Anspruch 10, **dadurch gekennzeichnet, dass** im Falle a) die Aktionen in folgender chronologischer Reihenfolge ausgeführt werden:
1) - die Funktion der Ansaugmittel (9) wird ausgelöst,
2)- die Funktion der Gasversorgungsmittel (7) wird ausgelöst,
3)- die Funktion der elektrischen Energieversorgungsmittel wird ausgelöst.

12. Steuerungsverfahren nach Anspruch 10 oder 11, **dadurch gekennzeichnet, dass** im Falle b) die Aktionen in folgender chronologischer Reihenfolge ausgeführt werden:
1)- die Funktion der elektrischen Energieversorgungsmittel (8) wird unterbrochen,
2)- die Funktion der Gasversorgungsmittel (7) wird unterbrochen und
3)- die Funktion der Ansaugmittel (9) wird unterbrochen.

13. Steuerungsverfahren nach einem der Ansprüche 10 bis 12, **dadurch gekennzeichnet, dass** die Gasversorgungsmittel (7) Versorgungsmittel für reduzierendes Gas (14) und Versorgungsmittel für Trägergas und Sauerstoffgas (15, 16) umfassen und die Informationsverarbeitungseinheit (10) beim Auslösen der Funktion der Gasversorgungsmittel die Funktion der Versorgungsmittel für Trägergas und Sauerstoffgas (15, 16) und dann die der Versorgungsmittel für reduzierendes Gas (14) auslöst, und bei einer Unterbrechung dieser Funktion dieser Gasversorgungsmittel die Funktion der Versorgungsmittel für reduzierendes Gas (14) und dann die der Versorgungsmittel für Trägergas und Sauerstoffgas (15, 16) unterbricht.

14. Steuerungsverfahren nach einem der Ansprüche 10 bis 13, **dadurch gekennzeichnet, dass** über Informationsübertragungsmittel (26) ein Fernsteuerungs-/kontrollvorgang ausgeführt wird.

## Claims

1. Device for controlling the operation of a system for treating a surface of a solid running substrate, by dielectric barrier discharge in a controlled gaseous atmosphere, a system of the type comprising a treatment device (2) through which the substrate (3) to be treated runs, this treatment device being connected to means (7) for supplying the latter with gas, to means (8) for supplying the latter with electrical power in order to generate the electrical discharge, and to gas suction means (9), **characterized in that** it includes a data processing unit (10) designed to receive, as input, data concerning the speed at which the substrate runs through the treatment device, the data processing unit being connected at the output to the gas supply means (7), to the electrical power supply means (8) and to the gas suction means (9), in order:
a) upon starting the treatment device (2) and when the running speed of the substrate (3) is greater than a predetermined speed, to carry out the following actions:
- initiate operation of the suction means (9),
- initiate operation of the gas supply means (7),
- initiate operation of the electrical power supply means (8), and
b) upon stopping the device and/or when the running speed of the substrate drops to a level below a predetermined speed, to carry out the following actions:
- interrupt operation of the electrical power supply means (8),
- interrupt operation of the gas supply means (7), and
- interrupt operation of the suction means (9).

2. Control device according to Claim 1, **characterized in that** the data processing unit (10) is capable, in case a), of carrying out the said actions in the following chronological order:
1)- initiating operation of the suction means (9),
2)- initiating operation of the gas supply means (7),
3)- initiating operation of the electrical power supply means.

3. Control device according to Claim 1 or 2, **characterized in that** the data processing unit (10) is capable, in case b), of carrying out the said actions in the following chronological order:
1) - interrupting operation of the electrical power supply means (8),
2)- interrupting operation of the gas supply means (7), and
3)- interrupting operation of the suction means (9).

4. Control device according to one of Claims 1 to 3, **characterized in that** the gas supply means (7) comprise reducing gas supply means (14) and carrier gas and oxidizing gas supply means (15, 16) and **in that** the data processing unit (10), upon initiating operation of these gas supply means, is adapted to initiate the operation of the carrier gas and oxidizing gas supply means (15, 16), followed by that of the reducing gas supply means (14) and upon interruption of the operation of these gas supply means, is adapted to interrupt the operation of the reducing gas supply means (14), and that of the carrier gas and oxidizing gas supply means (15, 16).

5. Control device according to one of Claims 1 to 4, **characterized in that** the data processing unit is connected to state sensors and/or to functional actuators (17, 18, 19, 20) of the processing system, in order to allow control/monitoring of the operation thereof.

6. Control device according to any one of the preceding claims, **characterized in that** the data processing unit (10) is connected to a centre for remote-control/monitoring of the treatment system via data transmission means (26).

7. Control device according to Claim 5 or 6, **characterized in that** the data processing unit (10) is connected to state sensors (22, 23, 24) of the gas supply means (7) of the treatment device in order to initiate the operation of alarm means (21) and/or emergency supply means, in the event of malfunction of the gas supply means.

8. Control device according to any one of the preceding claims, **characterized in that** . the data processing unit (10) is connected to at least one human/machine interface (25).

9. Control device according to any one of the preceding claims, **characterized in that** the data concerning the running speed of the substrate (3) in the treatment device (2) is delivered to the data processing unit (10) by a speed sensor (13) associated therewith.

10. Method of controlling the operation of a system for treating the surface of a solid running substrate, by dielectric barrier discharge in a controlled gaseous atmosphere, a system of the type comprising a treatment device (2) through which the substrate (3) to be treated runs, this device being connected to means (7) for supplying the latter with gas, to means (8) for supplying the latter with electrical power in order to generate the electrical discharge, and to gas suction means (9), **characterized in that** the running speed of the substrate through the device is measured and **in that** the following actions are carried out:
a) upon starting the treatment device (2) and when the running speed of the substrate (3) is greater than a predetermined speed:
- operation of the suction means (9) is initiated,
- operation of the gas supply means (7) is initiated,
- operation of the electrical power supply means (8) is initiated, and
b) upon stopping the device and/or when the running speed of the substrate drops to a level below a predetermined speed:
- operation of the electrical power supply means (8) is interrupted,
- operation of the gas supply means (7) is interrupted, and
- operation of the suction means (9) is interrupted.

11. Control method according to Claim 10, **characterized in that** in case a), the said actions are carried out in the following chronological order:
1)- operation of the suction means (9) is initiated,
2)- operation of the gas supply means (7) is initiated,
3)- operation of the electrical power supply means is initiated.

12. Control method according to Claim 10 or 11, **characterized in that** in case b) , the said actions are carried out in the following chronological order:
1)- operation of the electrical power supply means (8) is interrupted,
2)- operation of the gas supply means (7) is interrupted, and
3)- operation of the suction means (9) is interrupted.

13. Control method according to one of Claims 10 to 12, **characterized in that** the gas supply means (7) comprise reducing gas supply means (14) and carrier gas and oxidizing gas supply means (15, 16) and **in that** the data processing unit (10), upon initiating the operation of the gas supply means, initiates the operation of the carrier gas and oxidizing gas supply means (15, 16), then that of the reducing gas supply means (14) and upon interruption of the operation of these gas supply means, it interrupts the operation of the reducing gas supply means (14), then that of the carrier gas and oxidizing gas supply means (15, 16).

14. Control method according to one of Claims 10 to 13, **characterized in that** the treatment system is remotely controlled/monitored via data transmission means (26).
